Europäisches Patentamt

European Patent Office

Office européen des brevets

(19)

(11) Veröffentlichungsnummer: **0 346 792 B1**

(12) # EUROPÄISCHE PATENTSCHRIFT

(45) Veröffentlichungstag der Patentschrift:
21.11.91 Patentblatt 91/47

(51) Int. Cl.$^5$: **C03B 9/32**, C03B 9/347

(21) Anmeldenummer: **89110574.4**

(22) Anmeldetag: **12.06.89**

(54) **Vorrichtung zum Herstellen eines mit einem eingeprägten Emblem versehenen Glasbehälters, insbesondere Glasflasche.**

(30) Priorität: **14.06.88 DE 3820257**

(43) Veröffentlichungstag der Anmeldung:
**20.12.89 Patentblatt 89/51**

(45) Bekanntmachung des Hinweises auf die
Patenterteilung:
**21.11.91 Patentblatt 91/47**

(84) Benannte Vertragsstaaten:
**AT CH DE ES FR GB IT LI NL**

(56) Entgegenhaltungen:
**DE-A- 2 401 299**
**GB-A- 273 034**
**US-A- 490 966**

(73) Patentinhaber: **BAYERISCHE FLASCHEN-GLASHÜTTENWERKE WIEGAND & SÖHNE GMBH & CO. KG**
**Otto-Wiegand-Strasse 9**
**W-8641 Steinbach am Wald (DE)**

(72) Erfinder: **Seifferth, Karl**
**Im Lehen 6**
**W-8641 Steinbach a. Wald (DE)**
Erfinder: **Fröba, Willi**
**Rennsteigstrasse 24**
**W-8641 Steinbach a. Wald (DE)**

(74) Vertreter: **Bockhorni, Josef, Dipl.-Ing. et al**
**Patentanwälte Herrmann-Trentepohl, Kirschner, Grosse, Bockhorni Forstenrieder Allee 59**
**W-8000 München 71 (DE)**

# Beschreibung

ie Erfindung betrifft eine Vorrichung gemäß dem Oberbegriff des Patentanspruches 1.

Insbesondere befaßt sich die Erfindung mit der Herstellung von Bocksbeutelflaschen, bei denen ein aufgeprägtes Emblem auf der Flaschenschmalseite frei von einem Grat sein soll, der bei der Fertigung aufgrund der Teilungsebene der Form entsteht. Diese Flaschen werden nach dem Blasverfahren hergestellt, bei dem in einen in zwei Formhälften eingesetzten sogenannten Külbel nach Schließen der Form Druckluft eingeblasen wird.

Bei der Herstellung von Bocksbeutelflaschen, die bekanntlich zwei Breitseiten und zwei schmale Seiten aufweisen, sind an der Flaschenbreitseite oder der Flaschenschmalseite erhabene oder reliefartige Embleme ausgebildet, die durch entsprechende Ausprägungen im Flaschenmaterial hergestellt sind.

Nach einem bekannten Verfahren erfolgt das Einprägen des Emblems dadurch, daß ein entsprechendes Negativ des gewünschten Emblems in einer der Formhälften der Fertigform eingraviert wird, in welcher der Külbel nach Umsetzen aus der Vorform zur Flasche geblasen wird. Da üblicherweise die Teilungsebene der Fertigform zur Herstellung derartiger Flaschen mit der mittleren Symmetrieebene durch die Flaschenschmalseiten ausgerichtet ist, erfolgt das Eingravieren der Embleme auf der Forminnenfläche einer der beiden Formhälften der Fertigform, die die Breitseite der Flasche ausbildet. Mithin befinden sich die Embleme bei dieser Verfahrensweise üblicherweise auf der Flaschenbreitseite.

Häufig wird jedoch auch die Ausbildung des Emblems auf der Flaschenschmalseite gewünscht. Dies hat dann zur Folge, daß in jede Formhälfte im Bereich der Teilungsebene eine Hälfte des Emblems eingraviert wird, so daß nach Schließen der Form die beiden Emblemhälften sich zu einer ganzen Emblemform zusammenfügen. Allerdings verläuft dann der durch die Teilungsebene der Form bedingte Grat mitten durch das auf der Flasche eingeprägte Emblem.

Diese Schwierigkeit läßt sich dadurch beheben, daß die Teilungsebene in die mittlere Symmetrieebene bezüglich der beiden Flaschenbreitseiten gelegt wird, so daß dann das Emblem im ganzen im Schmalseitenbereich der Formhälften eingraviert werden kann. Dann ist zwar das auf der Flaschenschmalseite ausgeformte Emblem gratfrei, jedoch verläuft der durch die Teilungsebene bedingte Grat über beiden Flaschenbreitseiten, also dort, wo üblicherweise das Flaschenetikett aufgeklebt wird. Dies ist aber nachteilhaft, da sich durch den Grat nämlich eine Aufwerfung bzw. Faltung des Etiketts ergibt, was zur Zerstörung des Etiketts durch den Grat führen kann.

Aus der US-A-490966 ist eine Form bekannt, die aus zwei Formhälften besteht und bei der der Formhohlraum zugleich durch einen Stempel begrenzt wird, der an seinem, dem vom Hohlraum zugewandten Ende das Negativ eines auf die Flasche aufzubringenden Emblems aufweist. Hierbei sollen Flaschen hergestellt werden, die mit einem individuellen Namen geprägt werden können. D.h. aber, der Stempel bleibt stationär in seiner eingeschobenen Stellung bei der Herstellung einer bestimmten Anzahl von Flaschen. Im besonderen ist bei der bekannten Form das Emblem aus der Teilungsebene heraus verlagert, indem der die Emblemform tragende Stempel auf einer von der Teilungsebene abgewandten Fläche der Form angeordnet ist.

Aufgabe der Erfindung ist es, in einfacher und schonender Weise eine gratfreie Formung eines Emblems auf der Schmalseite einer Glasflasche mit zwei Flaschenschmalseiten und zwei Flaschenbreitseiten selbst dann zu gewährleisten, wenn das Emblem im Bereich der Teilungsebene angeordnet ist, d.h. der durch die Teilungsebene bedingte Grat an sich durch das Emblem verlaufen würde. Dieses Problem ist insbesondere bei Bocksbeutelflaschen mit auf der Schmalseite aufgeprägten Emblemen von Bedeutung, wo die Teilungsebene mit der mittleren Symmetrieebene durch die Flaschenschmalseiten zusammenfällt.

Diese Aufgabe wird erfindungsgemäß durch die Vorrichtung gemäß dem Patentanspruch 1 gelöst. Zweckmäßige Weiterbildungen der Erfindung sind durch die in den Unteransprüchen angegebenen Merkmale gekennzeichnet.

Nach der Erfindung bedarf es keiner aufwendigen Bearbeitung der Formhälften, da die Emblemform davon separat ausgebildet und durch einen Stempel aus einer zurückgefahrenen Ruhestellung in die Formstellung vorgefahren wird. Es muß lediglich der die Emblemform tragende Stempelteil relativ zu den übrigen Formteilen gelagert bzw. geführt werden, was aber einfach ist. Auch muß hierbei bei einem Verschleiß der anfälligeren Emblemform nicht die ganze Form, sondern nur die Emblemform ersetzt werden. Nach der Erfindung erfolgt schließlich eine gratfreie Herstellung eines die Teilungsebene der Fertigform schneidenden Emblems auf einem Glasbehälter, insbesondere einer Glasflasche dadurch, daß die Emblemform selbst nicht mehr in eine der beiden oder in beide Formhälften eingraviert ist, vielmehr separat auf einem eigenen Stempel angeordnet und von diesem getragen ist. In der vorgerückten Formendstellung begrenzt die am Stempel getragene Emblemform zusammen mit den anderen Formhälften den Formhohlraum zur Ausbildung der Flasche. Wird dann innerhalb der Form ein Kübel, der aus einer Vorform in die Fertigform umgesetzt wird, geblasen, so erfolgt die Einprägung des Emblems auf der Flasche. Dann ist es möglich, eine gratfreie Herstellung eines Emblems selbst dann zu bewerkstelligen, wenn das Emblem sich im Bereich der Teilungsebene der Form befindet, d.h. der von der Teilungsebene bedingte Grat an sich das Emblem schneidet bzw. durch das Emblem laufen würde. Durch die separate Emblemform ist nämlich ausgeschlossen, daß das Emblem selbst durch irgendeinen herstellungsbedingten Grat beeinträchtigt wird, vielmehr verläuft die Teilungsebene der beiden Formhälften bis zur Emblemform und dann um die Emblemform herum, so daß ein allenfalls sich ausbildender Grat in den Umfangsrand des Emblems fällt. Üblicherweise sind jedoch die Umfangsränder derartiger Embleme durch eine Wulst od. dgl. gebildet, so daß dann der Grat überhaupt nicht in Erscheinung tritt. Damit ist es möglich, ein Emblem auf einer Flasche zu prägen, die völlig frei von einem Grat ist. Abgesehen davon, entfällt das aufwendige Eingravieren der Emblemform in eine der Formhälften.

Zur Herstellung einer Flasche wird erfindungsgemäß nach Umsetzen des Kübels aus der Vorform in die Fertigform diese durch Zusammenfahren der beiden Formhälften geschlossen, wobei der die Emblemform tragende Stempel in die Formendstellung verfahren wird, in welcher die für die Ausformung der Emblem wesentliche Formfläche der Emblemform bündig mit den Forminnenflächen der beiden anderen Formhälften zur Begrenzung des Formhohlraumes abschließt. Es erfolgt dann der Blasvorgang, so daß sich das schmelzflüssige Material an die Forminnenwand anlegt und damit automatisch auch die Einprägung des Emblems erfolgt. Danach wird der Stempel aus einer vorderen Formendstellung zurückgefahren, so daß die Emblemform von der geformten Flasche abgehoben wird. Danach werden die beiden Formhälften auseinandergefahren und die hergestellte Flasche kann der Form entnommen werden.

Zweckmäßigerweise ist der Stempel durch einen in einer Buchse verschieblich geführten Stempelschaft gebildet, der an seinem vorderen Ende die Emblemform trägt. Die Buchse ist hierbei in einer entsprechenden Ausnehmung einer der Formhälften im Bereich der Teilungsebene aufgenommen, wobei in der anderen Formhälfte eine entsprechende Ausnehmung vorgesehen ist, so daß nach Schließen der beiden Formhälften die Buchse in einer zylindrischen Bohrung gekammert ist, die durch die Ausnehmungen der beiden Formhälften gebildet ist.

Ferner ist zweckmäßig, wenn der die Emblemform tragende Stempelschaft durch eine Feder in einer Stellung vorgespannt ist, in der die Emblemform zurückgefahren ist. Für den Formvorgang braucht lediglich der Stempelschaft in seine vordere Formendstellung gedrückt zu werden. Das Abheben der Emblemform von der fertig hergestellten Flasche erfolgt dann alleine aufgrund der durch die Feder ausgeübten Vorspannkraft.

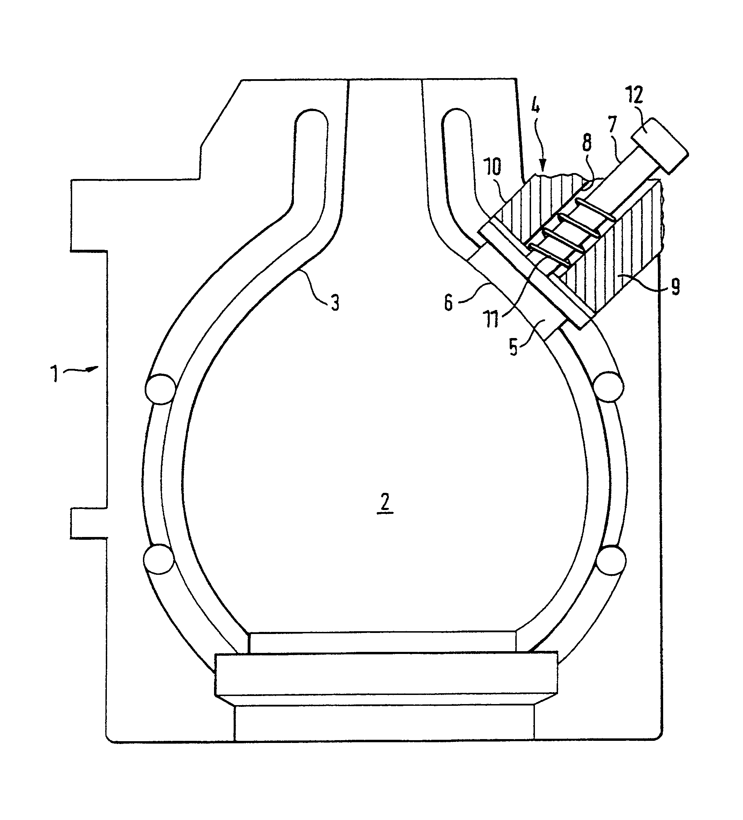

Nachfolgend wird ein Ausführungsbeispiel der Erfindung anhand der Zeichnung beschrieben, deren einzige Figur eine schematische Draufsicht auf eine Formhälfte von der Forminnenseite her zeigt.

Die Figur zeigt in Draufsicht eine Formhälfte 1 einer aus zwei Formhälften bestehenden Fertigform zur Herstellung einer Bocksbeutelflasche. Mit 2 ist die Forminnenfläche der Formhälfte 1 bezeichnet. Ersichtlich fällt die Teilungsebene der Formhälfte bzw. der Fertigform mit der Zeichenebene zusammen. In der Teilungsebene zeichnet sich mit 3 die Kontur der Bocksbeutelflasche. Da die Teilungsebene der Fertigform durch die Mittelebene der Flasche verläuft, sind die beiden Formhälften symmetrisch ausgebildet und entspricht die Kontur 3 den größten Querschnitt der Bocksbeutelflasche, die bekanntermaßen zwei gegenüberliegende Breitseiten und zwei gegenüberliegende Schmalseiten aufweist.

Mit der Fertigform, die durch Schließen der in der Figur dargestellten Formhälfte 1 mit einer komplementären, zeichnerisch nicht festgehaltenen Formhälfte gebildet ist, wird eine Flasche hergestellt, auf deren Schmalseite ein Emblem eingeprägt ist. Das Emblem wird somit an einer Stelle eingeprägt, welche die Teilungsebene kreuzt, so daß das Emblem normalerweise von dem durch die Teilungsebene bedingten Grat auf der Flasche geschnitten wird.

Um den Gratverlauf durch das Emblem auf der Flaschenschmalseite zu vermeiden, dient der in der Figur mit 4 bezeichnete Stempel, der mit seiner Achse in der Teilungsebene angeordnet ist und an seinem inneren, dem Formhohlraum bzw. der Forminnenfläche 2 zugewandten Ende eine Emblemform, also ein plattenförmiges Formteil mit einem das Emblem prägenden Negativ aufweist. Die Emblemform ist mit 5 bezeichnet.

In der in der Figur dargestellten Formendstellung schließt die Vorderfläche 6 der Emblemform 5 bündig mit der Forminnenfläche 2 der Formhälfte 1 sowie gleichermaßen bündig mit der Forminnenfläche der korrespondierenden zweiten Formhälfte in Schließstellung der Form ab, so daß die Vorderfläche 6 der Emblemform 5 zusammen mit den Forminnenflächen 2 der Formhälften in deren Schließstellung den Formhohlraum zur Bildung der Flasche begrenzen. Erfolgt in dieser End- bzw. Schließstellung der Form das Blasen des in die Fertigform eingebrachten Külbels zur Flasche, so erfolgt die Ausprägung des Emblems, wobei ein allenfalsiger Grat über den Umfang der Emblemform 5 und damit am Außenrand der Vorderfläche 6 der Emblemform verläuft, jedoch nicht das auf der Flasche ausgebildete Emblem durchschneidet oder kreuzt. Da bei den auf Bocksbeutelflaschen zumeist verwendeten Emblemen ohnehin äußerer ringförmiger Begrenzungswulst vorhanden ist, fällt ein allenfalsig noch verbleibender Grat in diese Ringwulst, so daß er praktisch nicht mehr sichtbar ist.

Für die Entformung der Flasche aus der Fertigform wird der Stempel aus der in der Figur dargestellten Endstellung zurückgefahren.

Im einzelnen umfaßt der Stempel einen mit 7 bezeichneten Stempelschaft, an dessen vorderen Ende die Emblemform 5 angeordnet ist. Der Stempelschaft 7 ist in einer Bohrung 8 eines Stempelgehäuses 9 in Art einer Hülse geführt. Das Stempelgehäuse 9 ist nur teilweise in der Figur dargestellt und sitzt in einer Bohrungshälfte bzw. einer segmentartigen Ausnehmung 10 der Formhälfte 1. Eine entsprechende teilzylindrische Bohrung, die sich mit der teilzylindrischen Bohrung 10 zu einer Gesamtbohrung ergänzt, ist in der anderen Formhälfte an derselben Stelle ausgebildet. Innerhalb des Stempelgehäuses 9 ist der Stempelschaft 7 durch eine Feder 11 in eine Endstellung vorgespannt, in welcher die Emblemform 5 aus der Formendstellung, wie sie in der Figur dargestellt ist, nach außen zurückgefahren ist. Die Endstellungen der Stempelbewegung sind zweckmäßigerweise durch übliche Anschläge festgelegt, wobei die Anschläge verstellbar sein können. Die Aufbringung der Stempelbewegung erfolgt über eine mit 12 bezeichnete Betätigungsnocke. Die Rückstellung des Stempelschaftes aus der Formendstellung erfolgt über die Feder 11.

Zur Herstellung der Flasche wird ein in einer Vorform hergestellter Külbel in die offene Fertigform verschwenkt, wonach durch Zusammenfahren der beiden Formhälften die Fertigform geschlossen wird. Gleichzeitig drückt der Stempelschaft 7 die Emblemform 5 in ihre Formendstellung, so daß die Vorderfläche 6 der Emblemform 5 bündig mit der Forminnenfläche der Fertigform abschließt. Dann erfolgt der Blasvorgang zur Bildung der Flasche unter gleichzeitiger Ausformung des Emblems. Danach wird der Stempelschaft 7 zurückgefahren, so daß die Emblemform mit ihrer Vorderfläche 6 von der hergestellten Flasche abhebt, wonach die Fertigform geöffnet und die hergestellte Flasche entnommen wird.

## Patentansprüche

1. Vorrichtung zur Herstellung einer mit einem eingeprägten Emblem versehenen Glasflasche mit zwei gegenüberliegenden Flaschenschmalseiten und -breitseiten, insbesondere Bocksbeutelflasche, unter Verwendung zweier Formhälften (1), die in Schließstellung einen die Flaschenform entsprechenden Formhohlraum begrenzen, wobei die Teilungsebene der beiden Formhälften (1) nur die Flaschenschmalseiten, vorzugsweise mittig, schneidet und das Emblem im Bereich der Teilungsebene und damit in der Überschneidung mit dem durch die Teilungsebene bedingten Grat angeordnet ist, **dadurch gekennzeichnet, daß** zur gratfreien Formung des Emblems ein die Emblemform (5) tragender Stempel (7, 12) in der Teilungsebene der Form angeordnet ist, welcher Stempel (7, 12) zusammen mit den Formhälften (1) den Formhohlraum begrenzt, so daß der bei der Formgebung der Flasche bedingte Grat in den Umfangsrand des Emblems verlegt wird.

2. Vorrichtung nach Anspruch 1, **dadurch gekennzeichnet, daß** der Stempel (4) in einer zylindrischen Bohrung aufgenommen ist, die in Schließstellung der Form von beiden Formhälften (1) begrenzt ist.

3. Vorrichtung nach Anspruch 1 oder 2, **dadurch gekennzeichnet, daß** der Stempel (4) einen in einer Buchse (9) geführten Stempelschaft (7) aufweist, und daß die Buchse (9) in einer teilzylindrischen Ausnehmung (10) einer Formhälfte (1) aufgenommen ist, welche mit einer teilzylindrischen Ausnehmung der anderen Formhälfte die zylindrische Bohrung zur Aufnahme des Stempels (4) begrenzt.

4. Vorrichtung nach einem der Ansprüche 1 bis 3, **dadurch gekennzeichnet, daß** der Stempelschaft (7) durch eine Feder (11) in einer Endstellung vorgespannt ist, in welcher die Emblemform (5) von der Forminnenhälfte (2) der Formhälfte (1) zurückgezogen ist.

5. Vorrichtung nach einem der vorhergehenden Ansprüche, **dadurch gekennzeichnet, daß** die Formendstellung des Stempels (4) durch einen Anschlag begrenzt ist.

6. Vorrichtung nach einem der vorhergehenden Ansprüche, **dadurch gekennzeichnet, daß** an dem der Emblemform abgewandten Ende des Stempelschaftes (7) eine Betätigungsnocke (12) für die gesteuerte Hin- und Herbewegung des die Emblemform (5) tragenden Stempelschaftes (7) angeordnet ist

7. Vorrichtung nach einem der vorhergehenden Ansprüche, **dadurch gekennzeichnet, daß** die Achse des Stempelschaftes (7) sich in der Teilungsebene der Form erstreckt, welche die Emblemform (5) in der Mitte schneidet.

## Claims

1. An apparatus for producing a glass bottle provided with an embossed emblem and having two opposing narrow sides and two opposing broad sides, in particular a bocksbeutel bottle, using two mold parts (1) which in their closed position limit a mold cavity corresponding to the bottle shape, whereby the mold joint of the two mold parts (1) only intersects the narrow sides of the bottle, preferably in the center, and the emblem is disposed in the area of the mold joint and thus overlaps the mold mark caused by the mold joint, **characterized** in that the emblem is formed free from a mold mark by disposing a die (7, 12) bearing the emblem mold (5) on the mold joint of the mold, which die (7, 12) together with the mold parts (1) limit the mold cavity so that the mold mark caused during molding of the bottle is shifted to the peripheral edge of the emblem.

2. The apparatus of claim 1, **characterized** in that the die (4) is taken up in a cylindrical bore that is limited by the two mold parts (1) in the closed position of the mold.

3. The apparatus of claim 1 or 2, **characterized** in that the die (4) has a die stamp (7) guided in a bushing (9), and the bushing (9) is taken up in a semicylindrical recess (10) in a mold part (1) which together with a semicylindrical recess in the other mold part limit the cylindrical bore for taking up the die (4).

4. The apparatus of any of claims 1 to 3, **characterized** in that the die stamp (7) is prestressed by a spring (11) in an end position in which the emblem mold (5) is withdrawn from the inner surface (2) of the mold part (1).

5. The apparatus of any of the preceding claims, **characterized** in that the end position of the die (4) in the mold is limited by a stop.

6. The apparatus of any of the preceding claims, **characterized** in that a trip stop (12) is disposed at the end of the die stamp (7) facing away from the emblem mold for the controlled reciprocating motion of the die stamp (7) bearing the emblem mold (5).

7. The apparatus of any of the preceding claims, **characterized** in that the axis of the die stamp (7) extends on the mold joint of the mold which intersects the emblem mold (5) in the middle.

## Revendications

1. Dispositif de fabrication d'une bouteille de verre munie d'un emblème incrusté, avec deux petits côtés et deux côtés larges opposés, en particulier d'une bouteille de poche, avec utilisation de deux demi-moules (1) qui, en position fermée, limitent une cavité moulée correspondant à la forme de la bouteille, le plan de joint des deux demi-moules (1) ne coupant que les petits côtés de la bouteille, de préférence au centre, et l'emblème étant disposé dans la zone du plan de coupe et, par conséquent, à l'intersection avec l'arête provoquée par le plan de coupe, caractérisé en ce que pour le façonnage sans ébarbure de l'emblème, un poinçon (7, 12) portant le moule de l'emblème (5) est disposé dans le plan de coupe du moule, ce poinçon (7, 12) limitant la cavité moulée avec les demi-moules (1), de sorte que l'arête provoquée lors du façonnage de la bouteille soit déplacée sur le bord circonférentiel de l'emblème.

2. Dispositif selon la revendication 1, caractérisé en ce que le poinçon (4) est logé dans un trou cylindrique qui est limité, en position fermée, à la forme des deux demi-moules (1).

3. Dispositif selon les revendications 1 ou 2, caractérisé en ce que le poinçon (4) présente une tige de poinçonnage (7) guidée dans une douille (9) et en ce que la douille (9) est logée dans un creux partiellement cylindrique (10) d'un demi-moule (1) qui limite, avec un creux partiellement cylindrique de l'autre demi-moule, le trou cylindrique de logement du poinçon (4).

4. Dispositif selon l'une des revendications 1 à 3, caractérisé en ce que la tige de poinçonnage (7) est tendue par un ressort (11) dans une position finale dans laquelle le moule de l'emblème (5) est retiré de la moitié interne (2) du demi-moule (1).

5. Dispositif selon l'une des revendications précédentes, caractérisé en ce que la position finale de moulage du poinçon (4) est limitée par une butée.

6. Dispositif selon l'une des revendications précédentes, caractérisé en ce que, à l'extrémité, opposée au moule de l'emblème, de la tige de poinçonnage (7), une came de commande (12) est disposée pour le mouvement commandé de va-et-vient de la tige de poinçonnage (7) portant le moule de l'emblème (5).

7. Dispositif selon l'une des revendications précédentes, caractérisé en ce que l'axe de la tige de poinçonnage (7) s'avance sur le plan de coupe du moule, qui coupe le moule de l'emblème en son centre.